(19) **Europäisches Patentamt / European Patent Office / Office européen des brevets**

(11) **EP 2 815 615 B1**

(12) **FASCICULE DE BREVET EUROPEEN**

(45) Date de publication et mention de la délivrance du brevet:
**06.04.2016 Bulletin 2016/14**

(21) Numéro de dépôt: **13704467.3**

(22) Date de dépôt: **18.02.2013**

(51) Int Cl.:
*H04W 64/00* (2009.01)   *G01S 5/06* (2006.01)

(86) Numéro de dépôt international:
**PCT/EP2013/053157**

(87) Numéro de publication internationale:
**WO 2013/121036 (22.08.2013 Gazette 2013/34)**

(54) **METHODE DE CARTOGRAPHIE DE SIGNATURES WI-FI PAR COLLECTE AVEUGLE DE MESURES RSS**

VERFAHREN ZUR ABBILDUNG VON WI-FI-SIGNATUREN MITTELS BLINDER SAMMLUNG VON RSS-MESSUNGEN

METHOD FOR MAPPING WI-FI SIGNATURES BY MEANS OF THE BLIND COLLECTION OF RSS MEASUREMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2012   FR 1251492**

(43) Date de publication de la demande:
**24.12.2014   Bulletin 2014/52**

(73) Titulaire: **Pole Star**
**31100 Toulouse (FR)**

(72) Inventeurs:
- **GODEFROY, Baptiste**
  **F-31410 Saint Sulpice Sur Leze (FR)**
- **ETIENNE, Nicolas**
  **F-31400 Toulouse (FR)**
- **PROST, Jean-Baptiste**
  **F-31500 Toulouse (FR)**
- **LADERRIERE, Cyril**
  **F-31100 Toulouse (FR)**

(74) Mandataire: **Brevalex**
**95, rue d'Amsterdam**
**75378 Paris Cedex 8 (FR)**

(56) Documents cités:
- **Jahyoung Koo ET AL: "Autonomous Construction of a WiFi Access Point Map Using Multidimensional Scaling" In: "Field Programmable Logic and Application", 1 janvier 2011 (2011-01-01), Springer Berlin Heidelberg, Berlin, Heidelberg, XP055039680, ISSN: 0302-9743 ISBN: 978-3-54-045234-8 vol. 6696, pages 115-132, para. 3.1,3.2**
- **YI SHANG ET AL: "Localization from mere connectivity", PROCEEDINGS OF THE 4TH ACM INTERNATIONAL SYMPOSIUM ON MOBILE AD HOC NETWORKING & COMPUTING , MOBIHOC '03, 1 janvier 2003 (2003-01-01), page 201, XP055006982, New York, New York, USA DOI: 10.1145/778415.778439 ISBN: 978-1-58-113684-5**

EP 2 815 615 B1

**Description**

**DOMAINE TECHNIQUE**

La présente invention concerne le domaine du positionnement, notamment à l'intérieur de bâtiments (*indoor positioning*), au moyen de signatures Wi-Fi. Elle a plus particulièrement trait à une méthode de cartographie de telles signatures grâce à une collecte aveugle de mesures RSS (*Received Signal Strength*).

**ÉTAT DE LA TECHNIQUE ANTÉRIEURE**

La méthode de positionnement au moyen de signatures Wi-Fi (*Wi-Fi fingerprints*) a fait l'objet de nombreuses recherches ces dernières années. Elle s'avère en effet particulièrement prometteuse pour le positionnement dans un environnement où les signaux GPS ne sont que peu, voire pas disponibles, comme les zones situées à l'intérieur de bâtiments (environnement *indoor*).

Le principe d'une telle méthode de positionnement repose sur l'hypothèse que chaque point de la zone considérée peut être caractérisé de manière univoque par les niveaux de puissance (RSS) des signaux Wi-Fi émis par les points d'accès ou APs (*Access* Points) dans cette zone. Le vecteur constitué par les niveaux de puissance des signaux Wi-Fi reçus en un point est encore dénommé signature Wi-Fi de ce point.

Un récepteur (terminal, *smartphone*) peut alors obtenir sa position en effectuant une mesure des niveaux de puissance des signaux Wi-Fi présents. Cette mesure est comparée avec les signatures Wi-Fi stockées dans une base de données représentant la cartographie RSS de la zone considérée et la position du récepteur est donnée par celle du point possédant la signature Wi-Fi la plus proche de la mesure, au sens d'une certaine métrique.

La méthode de positionnement précitée présente toutefois l'inconvénient de nécessiter la constitution préalable d'une base de données contenant la cartographie RSS de la zone considérée. La constitution de la base de données nécessite généralement d'effectuer une campagne de mesures en parcourant systématiquement la zone et en relevant les niveaux RSS avec les coordonnées de chaque point de mesure.

Cette contrainte rend la mise en oeuvre d'une telle méthode de positionnement par signature RSS complexe et coûteuse.

Il a été récemment proposé une méthode de positionnement, dite WiFi-SLAM (*Simultaneous Localization And Mapping*), permettant de s'affranchir de la constitution préalable d'une base de données. On pourra en trouver une description dans l'article de B. Ferris et al. intitulé « Wi-Fi SLAM using gaussian process latent variable models » publié dans Proc. of the International Joint Conf. on Artificial Intelligence, 2007, pages 2480-2485. Toutefois, cette méthode repose sur des hypothèses restrictives sur un modèle probabiliste (GP-LVM) entre les niveaux RSS et les positions de mesure qui n'est pas souvent réalisé en pratique. De surcroît, elle ne permet pas d'obtenir un positionnement précis dans un environnement complexe.

L'article de J. Koo et al. intitulé « Autonomous construction of a WiFi access point map using multidimensional scaling » publié dans la revue Field Programmable Logic an Application, 1er Janvier 2011, vol. 6696, pages 115-132 décrit une méthode de cartographie de signatures WiFi dans une zone géographique prédéterminée, comprenant une étape de collecte de mesures de puissance de signaux WiFi horodatées le long d'une trajectoire d'un utilisateur dans une zone géographique.

L'article de Y. Shang et al. intitulé « Localization from mere connectivity » publié dans Proc. of the 4th ACM Int'l Symposium on Mobile Ad Hoc Networking & Computing, MOBIHOC '03, 1er Janvier 2003, pages 201-212 décrit une méthode de positionnement faisant appel à un algorithme MDS-MAP et à une information de connectivité dans un réseau ad hoc.

Un premier but de la présente invention est de proposer une méthode de cartographie de mesures RSS, sans relevé des coordonnées des points de mesure (collecte aveugle de mesures RSS), qui se prête bien à une approche collaborative et puisse être utilisable dans un environnement quelconque. Un second but de la présente invention est de permettre un positionnement qui ne requiert pas de campagne préalable de mesure.

**EXPOSÉ DE L'INVENTION**

La présente invention est définie comme une méthode de cartographie de signatures Wi-Fi dans une zone géographique prédéterminée, comprenant :

- une étape de collecte de mesures de puissance de signaux Wi-Fi, chaque mesure étant représentée par un vecteur constitué par les niveaux de puissance respectifs de signaux émis par une pluralité de points d'accès Wi-Fi, la collecte desdites mesures étant effectuée séquentiellement le long d'au moins une trajectoire d'un utilisateur au sein de ladite zone géographique, pour fournir au moins une séquence de mesures ;

- une étape de détermination d'un graphe représentatif de la trajectoire, chaque mesure de ladite séquence correspondant à un noeud ou à un point unique d'une arête de ce graphe ;
- une étape de caractérisation topographique de ladite trajectoire à partir au moins dudit graphe représentatif de la trajectoire et d'un modèle géométrique de la zone géographique, la caractérisation topographique associant à chaque mesure un point du modèle géométrique ;
- une étape de stockage de la séquence de mesures dans une base de données, chaque mesure étant stockée en relation avec le point du modèle géométrique qui lui a été associé à l'étape précédente.

L'étape de détermination du graphe représentatif de la trajectoire comprend avantageusement le calcul d'une matrice de distances constituée par des distances entre les mesures de ladite séquence, prises deux à deux, les mesures de ladite séquence étant rangées selon un ordre chronologique prédéterminé.

L'étape de détermination du graphe représentatif de la trajectoire comprend typiquement les étapes suivantes :

- construction d'un premier graphe, dit graphe de voisinage, dont chaque noeud correspond à une mesure de ladite séquence de mesures, deux noeuds du premier graphe étant reliés par une arête si les mesures correspondant à ces noeuds satisfont à un critère de voisinage, ladite arête étant alors affectée d'un poids égal à la distance entre ces mesures;
- construction d'un second graphe, dont les noeuds sont identiques aux noeuds du premier graphe, dit graphe géodésique, deux noeuds du graphe géodésique étant reliés par une arête dont le poids est égal à la longueur du plus court chemin entre ces noeuds dans le graphe de voisinage.

Selon une variante, le graphe géodésique est soumis à une réduction de dimension à l'aide d'un algorithme MDS-MAP.

Le graphe représentatif de la trajectoire est ensuite obtenu par simplification du graphe géodésique.

La simplification du graphe géodésique peut être réalisée notamment au moyen d'une découpe par communautés de ce graphe, après réduction de dimension ou non, les noeuds du graphe représentatif de la trajectoire étant des représentants respectifs des communautés ainsi obtenues.

Dans ce cas, la découpe par communautés du graphe géodésique peut être réalisée en :

- effectuant une analyse par composantes principales des mesures correspondant aux noeuds du graphe géodésique situés dans un voisinage de ce noeud ;
- classant par ordre décroissant les valeurs propres obtenues par ladite analyse ;
- comparant le rapport de la première à la seconde valeur propre par rapport à un seuil prédéterminé, le noeud étant classé comme étant de premier type, si le rapport est supérieur à ce seuil, et comme étant de second type, dans le cas inverse ;
- regroupant dans une même communauté les noeuds du second type satisfaisant à un critère de connectivité prédéterminé.

Le critère de connectivité d'un noeud du graphe géodésique peut être le nombre d'arêtes reliées à ce noeud dans le graphe de voisinage.

A chaque mesure, on associe un point du graphe représentatif de la trajectoire, ledit point étant défini soit comme un noeud soit comme un point d'une arête de ce graphe.

Si le noeud du graphe géodésique représentant ladite mesure fait également partie du graphe représentatif de la trajectoire, la mesure est associée à ce noeud, et, à défaut, le noeud du graphe géodésique, représentant ladite mesure, est projeté sur une arête reliant des premier et second noeuds, la mesure étant alors associée au point obtenu par projection, défini par le couple desdits premier et second noeuds et par un coefficient d'interpolation entre ces noeuds.

L'étape de caractérisation topographique de la trajectoire peut comprendre un appariement des noeuds du graphe représentatif de la trajectoire avec les noeuds d'un graphe extrait du modèle géométrique, dit graphe géométrique, et une recherche des arêtes communes au graphe représentatif de la trajectoire et au graphe géométrique.

On attribue ensuite à chaque mesure associée à un noeud du graphe représentatif de la trajectoire, la position du noeud du graphe géométrique qui lui est apparié, et l'on attribue à chaque mesure associée à un point d'une arête du graphe représentatif de la trajectoire une position obtenue par interpolation entre les positions des noeuds du graphe géométrique respectivement appariés aux noeuds reliés par cette arête dans ledit graphe représentatif.

Pour une mesure donnée, l'interpolation entre les positions des noeuds du graphe géométrique utilise de préférence le même coefficient d'interpolation que celui entre noeuds du graphe représentatif de la trajectoire.

Une mesure au moins de la séquence peut être labellisée par un label donnant une information de position.

Si la mesure labellisée est associée à un noeud du graphe représentatif de la trajectoire, ce noeud est apparié au noeud du graphe géométrique ayant la position la plus proche de celle donnée par le label de la mesure.

**BRÈVE DESCRIPTION DES DESSINS**

La Fig. 1 représente de manière schématique un ordinogramme de la méthode de cartographie de signatures Wi-Fi selon un mode de réalisation de la présente invention ;
La Fig. 2 représente un exemple de matrice de distances utilisée dans l'étape de détermination du graphe représentatif de la trajectoire de la Fig. 1 ;
La Fig. 3 représente sous forme d'ordinogramme un exemple de réalisation de l'étape de détermination du graphe représentatif de la trajectoire de la Fig. 1 ;
La Fig. 4 représente un exemple de matrice d'adjacence calculée à l'étape 320 de la Fig.3 ;
La Fig. 5A représente un graphe géodésique dans lequel ont été identifiés des noeuds du premier type et des noeuds du second type à l'étape 340 de la Fig. 3 ;
La Fig. 5B représente un graphe géodésique dans lequel des noeuds singuliers ont été identifiés ;
La Fig. 5C représente un graphe représentatif de la trajectoire de l'utilisateur ;
La Fig. 5D représente une manière d'associer un noeud du graphe géodésique à un point d'une arête du graphe représentatif de la trajectoire en Fig. 5C ;
La Fig. 6 représente sous forme d'ordinogramme un exemple de réalisation de l'étape de caractérisation topographique de la Fig. 1.

**EXPOSÉ DÉTAILLÉ DE MODES DE RÉALISATION PARTICULIERS**

Le principe de base de l'invention est d'utiliser la séquence de mesures d'un utilisateur parcourant la zone pour déterminer un graphe représentatif de sa trajectoire, et effectuer une caractérisation topographique de cette trajectoire à l'aide d'un modèle géométrique de la zone en question.

Plus précisément, nous considérons par la suite un utilisateur muni d'un récepteur et parcourant la zone selon une trajectoire quelconque, non connue *a priori.* L'utilisateur est équipé d'un récepteur de signaux Wi-Fi par exemple un terminal Wi-Fi ou un téléphone intelligent (*smartphone*) capable de mesurer, et soit d'enregistrer localement soit de transmettre à un serveur distant les niveaux RSS des différents points d'accès.

Nous désignerons dans la suite par vecteur de mesure RSS, ou plus simplement par mesure RSS ou encore mesure, un vecteur dont les éléments sont les niveaux de puissance des signaux Wi-Fi reçus des différents points d'accès (AP) de la zone géographique considérée. On suppose que les différents points d'accès sont indexés par leurs identifiants de réseau (BSSID) respectifs et que les éléments du vecteur de mesure RSS sont classés de manière univoque à partir de leurs identifiants.

Le récepteur effectue séquentiellement des mesures RSS le long de la trajectoire de l'utilisateur dans ladite zone géographique. Ces mesures peuvent être faites à intervalles réguliers ou non. Si celles-ci ne sont pas effectuées à intervalles réguliers, elles sont avantageusement, mais non nécessairement, horodatées. La séquence chronologique des mesures RSS le long de la trajectoire de l'utilisateur peut être représentée par une matrice :

$$\mathbf{M} = \begin{pmatrix} \mu_1^1 & \mu_1^2 & \cdots & \mu_1^n & \cdots & \mu_1^{N-1} & \mu_1^N \\ \mu_2^1 & \mu_2^2 & \cdots & \mu_2^n & \cdots & \mu_2^{N-1} & \mu_2^N \\ \vdots & \vdots & \cdots & \cdots & \cdots & \vdots & \vdots \\ \mu_P^1 & \mu_P^2 & \cdots & \mu_P^n & \cdots & \mu_P^{N-1} & \mu_P^N \end{pmatrix} \qquad (1)$$

où l'élément $\mu_p^n$ désigne la $n$ième mesure de puissance du signal reçu du $p$ième point d'accès. Dans la suite, la matrice **M** sera également dénommée séquence de mesures RSS ou plus simplement séquence de mesures. La $n$ième mesure de l'utilisateur le long de sa trajectoire sera notée $\boldsymbol{\mu}^n = \left( \mu_1^n, ..., \mu_P^n \right)^T$.

En règle générale, les mesures RSS obtenues par le récepteur ne sont pas labellisées. Par mesure labellisée, on entend une mesure à laquelle est associée une information de position. Cette information de position permet de situer le lieu de la mesure avec un degré de précision plus ou moins élevé.

Certaines mesures RSS d'une séquence peuvent être toutefois labellisées. Ce sera notamment le cas, si des signaux GPS sont disponibles en certains points de mesure (notamment en périphérie de zone *indoor*) ou bien encore si le récepteur est équipé d'un ou de plusieurs capteur(s) permettant de faire un pointage en certains lieux de la zone considérée.

En outre, les mesures RSS peuvent être complétées, le cas échéant, par des mesures physiques de capteurs additionnels (par exemple équipant le téléphone intelligent de l'utilisateur), tels que magnétomètre, accéléromètre, baromètre etc., réalisés de préférence en technologie MEMS. Les mesures des capteurs additionnels peuvent permettre de calculer une trajectoire relative du récepteur selon une méthode de navigation à l'estime (*dead reckoning*) connue en soi. Par exemple, si le récepteur est équipé d'un accéléromètre (ou d'un capteur de vitesse voire d'un podomètre), et d'un magnétomètre, il pourra estimer par intégration une distance parcourue selon le cap indiqué par un magnétomètre. Le cas échéant, on effectuera un changement de repère entre un repère lié au récepteur et le repère terrestre local pour obtenir cette information.

En pratique la trajectoire obtenue par une navigation à l'estime (dénommée également dans la suite trajectoire de *dead reckoning*) présente une dérive dans le temps du fait de l'intégration du signal de vitesse ou de la double intégration du signal d'accélération. En outre, les mesures magnétométriques (direction du champ magnétique) peuvent être entachées d'erreurs du fait de perturbations locales du champ.

La trajectoire obtenue par navigation à l'estime pourra être avantageusement utilisée dans certains modes de réalisation de l'invention comme décrit en détail plus loin.

L'invention s'applique avantageusement à un contexte collaboratif, c'est-à-dire au cas où plusieurs utilisateurs effectuent des séquences de mesures. On comprendra aussi qu'un même utilisateur peut effectuer des séquences distinctes en parcourant successivement des trajectoires différentes. Les situations précédentes sont susceptibles de relever du même formalisme dès lors que l'on considère une trajectoire composite constituée de K trajectoires d'un ou de plusieurs utilisateur(s). La séquence de mesures à considérer n'est autre que la concaténation des matrices $\mathbf{M}^{(1)}$ ,..., $\mathbf{M}^{(K)}$, relatives aux différentes trajectoires considérées. On peut donc se ramener sans perte de généralité à la trajectoire d'un utilisateur, celle-ci pouvant ne pas être connexe.

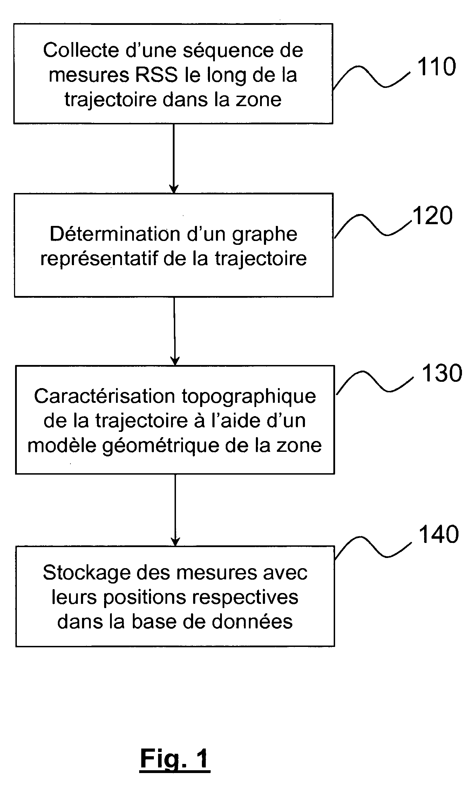

La Fig. 1 représente schématiquement un ordinogramme de la méthode de cartographie RSS selon un mode de réalisation de l'invention.

Dans une première étape, 110, on collecte au moins une séquence de mesures RSS d'un utilisateur. Les mesures RSS peuvent être collectées localement au niveau du récepteur avant d'être transmises par bloc à un serveur distant. Alternativement, les mesures peuvent être transmises une par une au serveur. Comme on l'a indiqué plus haut, l'étape de collecte peut concerner plusieurs utilisateurs et donc plusieurs trajectoires, $k = 1,..., K$, chaque trajectoire d'un utilisateur donnant lieu à une séquence élémentaire de mesures RSS représentée par une matrice $\mathbf{M}^{(k)}$, la séquence de mesures étant alors représentée par la concaténation de ces matrices.

Dans une seconde étape, 120, on détermine à partir de la séquence de mesures collectées un graphe représentatif de la trajectoire considérée, chaque mesure de ladite séquence correspondant à un point (noeud ou point d'une arête) de ce graphe.

L'étape 130, dite étape de caractérisation topographique, utilise le graphe représentatif obtenu à l'étape précédente et un modèle géométrique de la zone considérée pour associer à chaque mesure RSS un point correspondant du modèle géométrique. Par modèle géométrique, on entend une représentation simplifiée de la zone considérée, par exemple une représentation filaire de cette zone. Le modèle géométrique peut être un graphe classique de navigation permettant le calcul d'itinéraires entre différents points d'intérêt de cette zone. Le modèle géométrique peut être bidimensionnel ou tridimensionnel selon le type de zone. Dans le cas d'un modèle tridimensionnel, les transitions entre différents niveaux (étages d'un bâtiment par exemple) font partie du modèle géométrique.

Enfin, à l'étape 140, on stocke dans une base de données les mesures RSS, chaque mesure étant stockée en relation avec le point du modèle géométrique qui lui a été associé à l'étape précédente. Plus précisément, chaque enregistrement de la base de données comprend une information de position (les coordonnées du point du modèle géométrique) ainsi que les niveaux RSS de la mesure. La base de données contient ainsi une cartographie de signatures Wi-Fi de la zone.

Les étapes 110 à 140 peuvent être exécutées selon un processus collaboratif. Autrement dit, la base de données peut être constituée et/ou complétée par des utilisateurs parcourant successivement la zone géographique.

L'homme du métier comprendra que la base de données de signatures Wi-Fi peut ensuite être utilisée de manière conventionnelle pour déterminer la position d'un utilisateur. Pour ce faire, le récepteur (terminal équipé d'une carte Wi-Fi, smartphone) de l'utilisateur mesure les niveaux de puissance des différents points d'accès, recherche dans la base de données la signature Wi-Fi la plus proche de cette mesure au sens d'une métrique prédéterminée et récupère les coordonnées du point associé à la signature ainsi obtenue. Le cas échéant, la méthode de positionnement détermine un ensemble de signatures les plus proches de la mesure et effectue un calcul barycentrique à partir des positions associées à ces signatures.

Avantageusement, l'utilisateur enrichit la base de données en effectuant une nouvelle séquence de mesures et en la transmettant au serveur, tout en utilisant celles déjà stockées dans la base de données pour son propre positionnement.

Les différentes étapes de la méthode de cartographie de signatures Wi-Fi selon l'invention sont détaillées ci-après.

La détermination du graphe représentatif de la trajectoire opère sur au moins une séquence de mesures d'un utilisateur ou de plusieurs utilisateurs. Lorsque la base de données est obtenue à partir d'une seule séquence de mesures, la trajectoire de l'utilisateur couvre de préférence l'ensemble de la zone dont on souhaite réaliser la cartographie RSS.

Le cas échéant, les séquences de mesure peuvent être regroupées par sous-zones (la zone géographique peut être par exemple divisée en zones élémentaires ou en zones distantes). Le classement par sous-zone peut être réalisé à partir des identifiants (BSSID) des points d'accès. Pour un ensemble de points d'accès donnés, on ne considérera alors que les séquences dont les mesures présentent un niveau RSS non nul (en pratique inférieur à un seuil de bruit) pour au moins l'un des points d'accès de cet ensemble.

La détermination du graphe représentatif de la trajectoire fait appel à la notion de matrice de distances (ou matrice de dissimilarité) de deux séquence de mesures, ces séquences de mesures pouvant être distinctes ou non.

On introduit tout d'abord un opérateur mathématique $D$ de distance (distance euclidienne, distance de Minkowski, distance de Manhattan, distance de Mahalanobis) entre deux mesures RSS. Cette distance n'est autre que celle entre les vecteurs de taille $P$ représentant ces mesures.

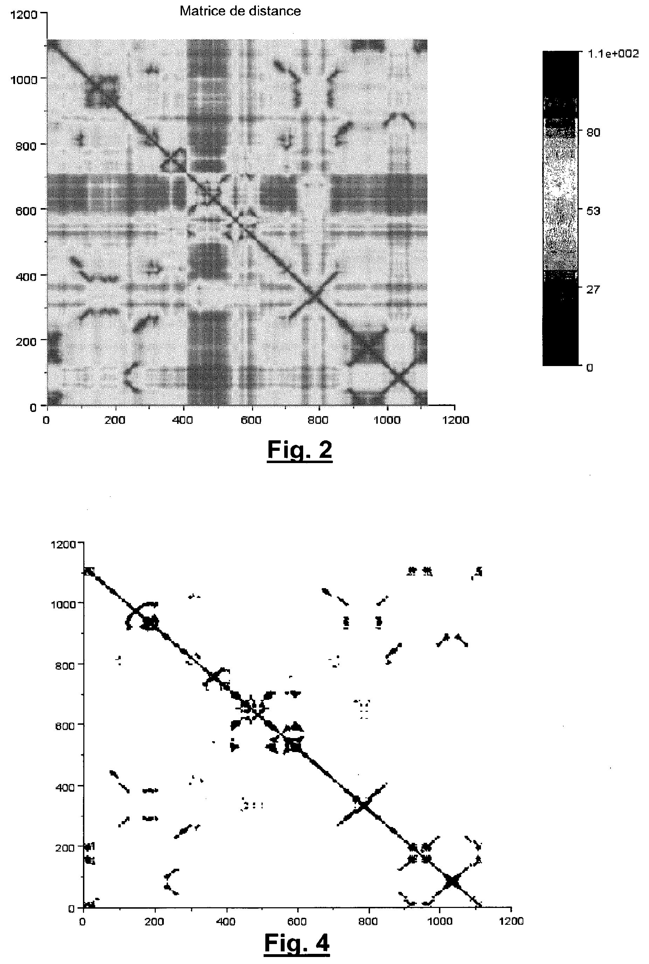

Pour estimer la similarité/ dissimilarité entre une première séquence de mesures $\mathbf{M_1}$ et une seconde séquence de mesures $\mathbf{M_2}$, on calcule la distance entre chaque mesure de $\mathbf{M_1}$ et chaque mesure de $\mathbf{M_2}$. Si la première séquence est de longueur $N_1$ et la seconde séquence de longueur $N_2$, on obtient alors une matrice de distances $\mathbf{D(M_1,M_2)}$ de taille $N_1 \times N_2$ dont les éléments sont les distances $D(\mathbf{\mu_i},\mathbf{\mu_j})$, où $\mathbf{\mu_i}$ et $\mathbf{\mu_j}$ sont respectivement des mesures de $\mathbf{M_1}$ et $\mathbf{M_2}$, $i=1,..,N_1$ et $j=1,..,N_2$. Lorsque l'on compare une séquence de mesure $\mathbf{M}$ à elle-même, la matrice de distances $\mathbf{D(M,M)}$ est carrée, symétrique et de diagonale nulle. A titre d'exemple, on a représenté en Fig. 2 la matrice de distances $\mathbf{D(M,M)}$ d'une même séquence de mesures. A noter que, lorsque des mesures additionnelles (autres que RSS) sont présentes dans la matrice $\mathbf{M}$, la matrice de distances les prend également en compte.

Dans la matrice de distances, les mesures RSS sont rangées selon un ordre chronologique, autrement dit, dans l'ordre de la séquence à laquelle elles appartiennent. Ainsi deux lignes consécutives ou deux colonnes consécutives correspondent à des mesures consécutives. Un bloc rectangulaire dans la matrice de similarité, délimité par les lignes $i_1$ et $i_2$, et les colonnes $j_1$ et $j_2$ mesure la similarité entre une portion ($i_1$ à $i_2$) de la première séquence et une portion ($j_1$ à $j_2$) de la seconde séquence. Si un bloc carré de la matrice présente de faibles valeurs (inférieures à un seuil prédéterminé) sur sa diagonale, cela signifie que les deux portions des séquences de mesure sont sensiblement alignées, et correspondent par conséquent à une portion de trajectoire commune, parcourue dans le même sens. De même, si ce même bloc présente de faibles valeurs sur son anti-diagonale, cela signifie que les deux portions des séquences de mesures correspondent à une portion de trajectoire commune, parcourue en sens inverse.

Lorsque l'on groupe plusieurs séquences élémentaires $\mathbf{M_1,M_2,...,M_Q}$ collectées par un ou plusieurs utilisateurs en une séquence composite $\mathbf{M}$ obtenue par concaténation de ces séquences, la matrice de distances de la séquence composite $\mathbf{M}$, notée $\mathbf{D(M,M)}$, donne les matrices de distances des séquences élémentaires qui la composent, soit $\mathbf{D(M_q,M_q)}$, $q=1,...,Q$ ainsi que les matrices de distances entre ces séquences, $\mathbf{D(M_q,M_{q'})}=\mathbf{D(M_{q'},M_q)}$, $q,q'=1,...,Q$. En effet, $\mathbf{D(M,M)}$ s'exprime comme suit:

$$\mathbf{D(M,M)} = \begin{pmatrix} \mathbf{D(M_1,M_1)} & \mathbf{D(M_1,M_2)} & \cdots & \mathbf{D(M_1,M_Q)} \\ \mathbf{D(M_2,M_1)} & \mathbf{D(M_2,M_2)} & \cdots & \mathbf{D(M_2,M_Q)} \\ \vdots & \vdots & \ddots & \vdots \\ \mathbf{D(M_Q,M_1)} & \mathbf{D(M_Q,M_2)} & \cdots & \mathbf{D(M_Q,M_Q)} \end{pmatrix}$$

$$(2)$$

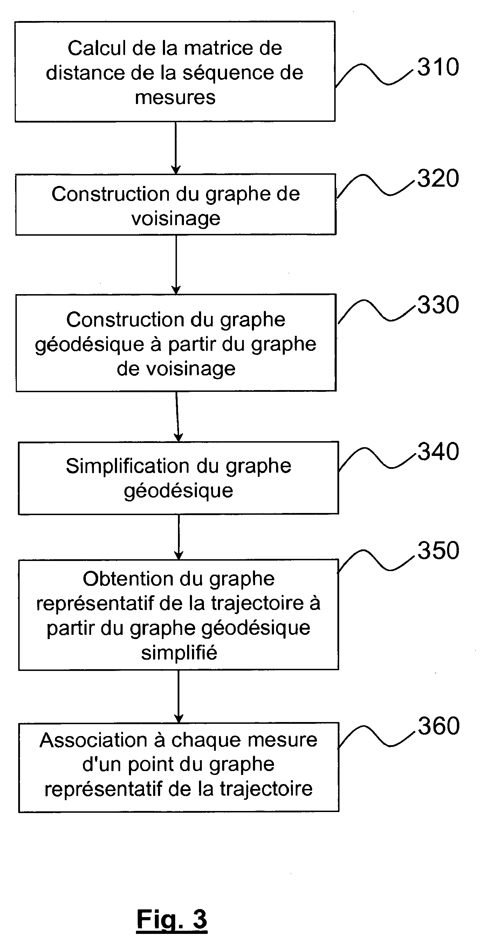

La Fig. 3 représente un exemple de réalisation de l'étape de détermination du graphe représentatif de la trajectoire dans la Fig. 1.

Dans une première étape, 310, on calcule la matrice de distances $\mathbf{D(M,M)}$ de la séquence de mesures. Lorsqu'une séquence de mesures $\mathbf{M}_{av}$ est déjà disponible dans la base de données, la matrice de distances peut être calculée par rapport à cette dernière séquence $\mathbf{D(M,M}_{av})$, le reste du traitement étant identique. Pour des raisons de simplification, mais sans perte de généralité, seul le premier sera décrit ci-après.

A l'étape 320, on construit un premier graphe, dit graphe de voisinage, V, à partir de la matrice de distances calculée à l'étape précédente. Pour ce faire, on attribue à chaque mesure un noeud du graphe et l'on calcule une matrice d'adjacence $\mathbf{M}_{ad}$ de taille $N \times N$ (où $N$ est la longueur de la séquence), dont les éléments sont des valeurs binaires $a_{ij}$ telles que $a_{ij}=1$ si les mesures $\mu_i, \mu_j$ (correspondant respectivement aux noeuds $i, j$ du graphe) satisfont à un critère de voisinage, et $a_{ij} = 0$ sinon.

Le critère de voisinage est un critère de proximité temporelle et, éventuellement, de similarité. Plus précisément, deux mesures de rangs $i, j$ de la séquence seront considérées comme temporellement proches (et donc voisines) si $|i-j| \leq \theta$. De préférence, on choisit $\theta = 1$, autrement dit deux mesures sont considérées comme temporellement proches si elles sont successives et les noeuds qui les représentent sont reliés par une arête. Dans ce cas, pour une séquence de mesures continue temporellement, la diagonale principale de la matrice d'adjacence ainsi que les diagonales secondaires au dessus et au dessous de la diagonale principale sont constituées d'éléments égaux à 1. Alternativement, lorsque les mesures sont horodatées, le critère de proximité temporelle peut porter sur les instants des mesures, deux mesures étant considérée comme proches si ces instants de mesure sont séparés de moins d'un écart temporel $\tau$ prédéterminé. La matrice d'adjacence comportera alors une bande diagonale de largeur variable d'éléments égaux à 1.

A titre d'exemple, on a représenté en Fig. 4 la matrice d'adjacence correspondant à la matrice de distances de la Fig. 2. Les points de cette figure aux indices $i, j$ correspondent à $a_{ij} =1$. Les autres éléments sont nuls.

En sus du critère de proximité temporelle, un critère de similarité peut être utilisé. Par exemple deux mesures $\mu_i, \mu_j$ seront considérées comme similaires si leur distance $D(\mu_i, \mu_j) < \varepsilon$, où $\varepsilon$ est un seuil de distance prédéterminé. Alternativement ou cumulativement, deux mesures seront considérées comme similaires si elles « voient » le même ensemble de points d'accès. Plus précisément, deux mesures $\mu_i, \mu_j$ seront considérées comme voisines si

$$\left\{ p=1,..,P \,\Big|\, \mu_i^p > \mu_{Th} \right\} = \left\{ p=1,..,P \,\Big|\, \mu_j^p > \mu_{Th} \right\}.$$

On pourra prendre par exemple $\mu_{Th} = 0$. Alternativement ou cumulativement encore, deux mesures seront considérées comme similaires si elles correspondent à un minimum local de la puissance mesurée d'un point d'accès $p$.

Dans le cas où le récepteur est équipé de capteurs additionnels et où les mesures de ces capteurs, dénommées dans la suite, mesures additionnelles, sont horodatées au même titre que les mesures RSS, on pourra utiliser comme critère de similarité supplémentaire une distance entre les mesures additionnelles. Par exemple, le critère de similarité sera considéré comme rempli si $D(\mu_i, \mu_j) < \varepsilon$ au sens précédent et si $D(\mu'_i, \mu'_j) < \varepsilon'$ où $\mu'_i, \mu'_j$ représentent les mesures additionnelles prises aux mêmes instants respectifs que les mesures $\mu_i, \mu_j$, et où $\varepsilon'$ est une valeur de seuil prédéterminée. Le cas échéant, si les mesures additionnelles sont prises à des instants distincts des mesures RSS, on pourra effectuer une interpolation de manière à procéder à un alignement temporel de ces premières sur ces dernières. Alternativement encore, lorsque le récepteur procède à une navigation à l'estime sur la base des mesures additionnelles horodatées, on pourra considérer le critère de similarité comme rempli si $D(\mu_i, \mu_j) < \varepsilon$ au sens précédent et si $d(P_i, P_j) \leq \eta$ où $P_i$ et $P_j$ sont les points de la trajectoire de *dead reckoning* correspondant aux instants des mesures $\mu_i, \mu_j$, et où $\eta$ est une valeur de seuil prédéterminée.

Dans tous les cas, si deux mesures $\mu_i, \mu_j$ sont considérées comme temporellement proches ou similaires au sens précédent, $a_{ij} =1$, et les noeuds d'indices $i, j$ du graphe de voisinage sont reliés par une arête. On comprendra que le graphe de voisinage comporte un relativement faible nombre d'arêtes. Le poids d'une arête entre noeuds du graphe de voisinage est donné par la distance entre les mesures correspondantes, à savoir $D(\mu_i, \mu_j)$.

A l'étape 330, on construit un second graphe, dit graphe géodésique, $G$, à partir du graphe de voisinage, $V$. Le graphe géodésique, à la différence du graphe de voisinage, est complet. Autrement dit, chaque noeud de $G$ est relié par une arête à chacun des autres noeuds de $G$.

Les poids des arêtes du graphe géodésique sont obtenus à l'aide des plus courts chemins au sein du graphe de voisinage. Plus précisément, si l'on considère l'arête joignant les noeuds $i, j$ du graphe $G$, le poids $d_{ij}$ de cette arête est donné par la longueur du plus court chemin entre les noeuds $i, j$ du graphe $V$.

Il est important de noter que les poids $d_{ij}$, au contraire des distances $D(\mu_i, \mu_j)$, ont une signification géodésique dans la mesure où ils fournissent une estimation de la distance entre les points de la zone géographique où ont été effectuées ces mesures. Ces distances sont dénommées par la suite distances géodésiques pour bien les distinguer des distances entre mesures $D(\mu_i, \mu_j)$.

Le graphe géodésique $G$ relie des points dans un espace de dimension $P$ (espace des mesures). Etant donné que ces mesures ont été prises en des points de dimension 2 ou 3 (espace de la zone géographique), on comprend intuitivement que la matrice $\mathbf{M}$ représentant la séquence des mesures soit dégénérée et celles-ci puissent donc être représentées dans un espace de dimension réduite (à savoir 2 ou 3 au lieu de $P$).

Optionnellement, le graphe géodésique fait l'objet d'une réduction de dimension, par exemple grâce à l'algorithme MDS-MAP dont on trouvera par exemple une description dans l'article de C. Ellis et al. intitulé « A comparison of MDS-MAP and non-linear regression » publié dans Proc. of 2010 International Conference on Indoor Positioning and Indoor Navigation (IPIN), 15-17 Sept. 2010, Zurich.

Quelle que soit la dimension du graphe géodésique (réduite ou non), celui-ci fait ensuite l'objet d'une simplification à l'étape 340, avantageusement au moyen d'une découpe par communautés (ou *clustering*). Le but de cette étape est de regrouper les noeuds en agrégats (ou communautés) significatifs. Un exemple préférentiel de réalisation de la découpe par communautés est donné ci-après.

Dans un premier temps, pour chaque point du graphe géodésique, on détermine l'ensemble des points situés dans un voisinage de ce point, à moins d'une distance géodésique prédéterminée, $\delta$, de celui-ci. Cette distance géodésique peut être fixée en fonction de la distance géodésique moyenne entre noeuds représentant des mesures successives. Par exemple, si la distance moyenne entre mesures successives est notée $\eta$, le voisinage peut être défini par une boule de rayon $\kappa.\eta$ où $\kappa$ est un facteur strictement supérieur à 1 (par exemple $\kappa = 4$).

Le voisinage du noeud ainsi défini, on considère la distribution des noeuds contenus dans ce voisinage et l'on effectue une analyse en composantes principales de cette distribution. L'analyse en composantes principales se fait dans l'espace des mesures ou dans l'espace de dimension réduite selon que l'on a procédé préalablement ou non à la réduction de dimension. L'analyse en composantes principales consiste à calculer les valeurs propres de la matrice de corrélation des coordonnées des noeuds dans l'espace considéré. On classe alors les valeurs propres par ordre décroissant. Si l'on note $\lambda_1$ et $\lambda_2$ respectivement la première et la seconde valeurs propres de la liste, on classe le noeud comme étant d'un premier type si $\lambda_1/\lambda_2 \gg 1$ et d'un second type dans le cas inverse, c'est-à-dire $\lambda_1 \approx \lambda_2$. Plus précisément, le noeud est considéré comme un noeud du premier type si $\lambda_1/\lambda_2 \geq \rho$ où $\rho$ est un seuil d'ellipticité, et du second type dans le cas inverse. Le voisinage d'un noeud du premier type est situé essentiellement le long d'une droite. Un tel noeud sera associé à une arête du graphe représentatif de la trajectoire. En revanche, le voisinage d'un noeud du second type est réparti sans direction privilégiée. Un tel noeud est un candidat au regroupement au sein d'une communauté, comme décrit plus loin.

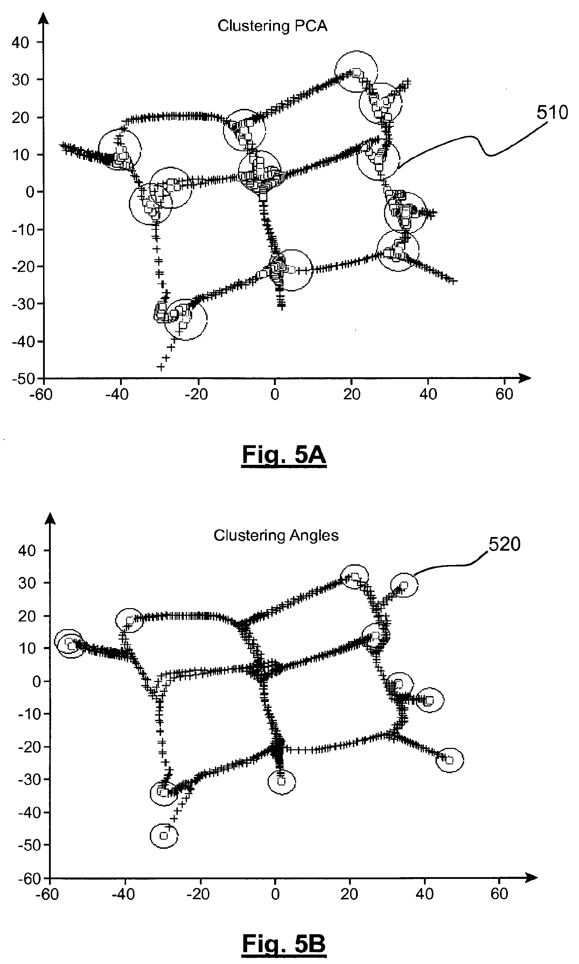

La Fig. 5A représente un exemple de graphe géodésique (dont la dimension a été réduite à 2) dans lequel on a classé les noeuds du premier type (représentés sous forme de croix) et les noeuds du second type (représentés sous forme de carrés). Les noeuds du second type sont regroupés en communautés représentées par les cercles 510.

Des noeuds du second type sont regroupés au sein d'une même communauté s'ils satisfont à un critère de connectivité prédéterminé. Par exemple, le critère de connectivité peut être que ces noeuds soient reliés entre eux dans le graphe de voisinage. On peut choisir un critère plus sélectif en ajoutant une condition supplémentaire selon laquelle un noeud ne fait partie d'une communauté donnée que dans la mesure où est relié, dans le graphe de voisinage, à plus de la moitié des noeuds de cette communauté.

De nombreux algorithmes de découpe de graphe par communautés (*graph clustering*) peuvent être utilisés pour déterminer les noeuds de premier et second types, et pour regrouper ces noeuds par type. On pourra notamment se référer à ceux passés en revue dans l'article de S.E. Schaeffer intitulé « Graph clustering » publié dans Computer Science Review I (2007), pages 27-64.

On choisit ensuite un représentant par communauté, par exemple le noeud de degré le plus élevé dans le graphe de voisinage ou celui présentant le rapport $\lambda_1/\lambda_2$ le plus faible, c'est-à-dire le plus proche de 1.

Selon une variante, des noeuds singuliers sont identifiés en sus au sein du graphe géodésique. La Fig. 5B représente le même exemple de graphe géodésique que la Fig. 5A, dans lequel des noeuds singuliers ont été entourés par des cercles 520. Ces noeuds singuliers présentent une configuration locale particulière : ils sont par exemple des extrémités de branches (degré égal à 1 dans le graphe de voisinage) ou des noeuds correspondant à des discontinuités de direction. Ils sont avantageusement caractérisés en considérant le voisinage d'un noeud $v$ et en déterminant pour chaque couple de noeuds $(v_1,v_2)$ appartenant à ce voisinage, l'angle $\beta = \left( \widehat{\overrightarrow{vv_1}, \overrightarrow{vv_2}} \right)$. Si la distribution de l'angle $\beta$ sur le voisinage est comprise dans une plage $[\beta_{min}, \beta_{max}]$ d'étendue inférieure à 360°, le noeud en question peut être identifié comme singulier.

Revenant à la Fig. 3, on détermine en 350 le graphe représentatif de la trajectoire, $\Omega$, à partir du graphe géodésique, $G$, simplifié à l'étape précédente, comme expliqué plus haut. Dans le cas d'une découpe par communautés, on comprendra que les représentants de ces communautés et, le cas échéant, les noeuds singuliers, constituent les noeuds du graphe $\Omega$.

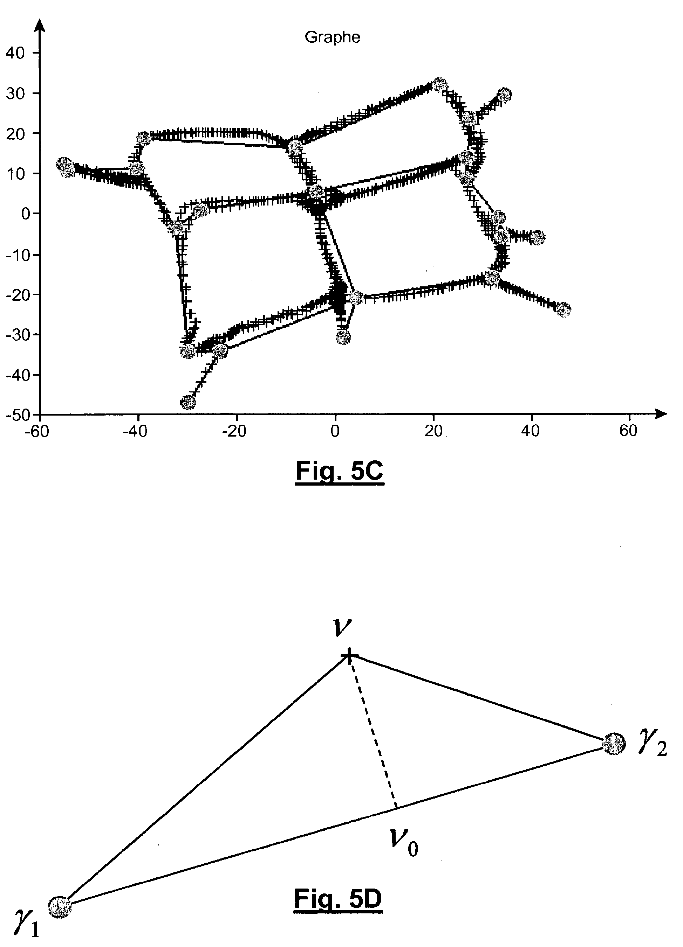

On a représenté en Fig. 5C un exemple de graphe représentatif de la trajectoire, obtenu à partir du graphe géodésique de la Fig. 5B. Les noeuds 530 sont les noeuds du graphe simplifié obtenu à l'étape 340.

Les arêtes du graphe $\Omega$ sont obtenues de la manière suivante. On considère successivement tous les noeuds $v$ du graphe géodésique hormis ceux qui ont déjà été sélectionnés comme noeuds du graphe $\Omega$ (par exemple représentants de communautés, noeuds singuliers). Pour chacun de ces noeuds, $v$, on détermine, au moyen du graphe géodésique, le couple de noeuds $(\gamma_1,\gamma_2)$ du graphe $\Omega$ les plus proches de $v$ (au sens de la plus faible distance géodésique). Si une arête $E$ n'est pas présente entre les noeuds $\gamma_1$ et $\gamma_2$ dans $\Omega$, on fait l'hypothèse qu'une telle arête existe. On projette ensuite le noeud $v$ sur l'arête $E$, la projection étant calculée dans l'espace de mesures ou dans l'espace de dimension réduite selon le cas. Soit $v_0$ le point projeté sur cette arête comme indiqué en Fig. 5D. Il est alors possible de déterminer le cosinus de l'angle $\alpha$ formé par $\overrightarrow{\gamma_1 v}$ et $\overrightarrow{\gamma_1 \gamma_2}$ au moyen des distances géodésiques $d_{\gamma_1 v}$, $d_{\gamma_1 \gamma_2}$ et $d_{\gamma_2 v}$ soit

$$\cos\alpha = \frac{d_{\gamma_1 v}^2 + d_{\gamma_1 \gamma_2}^2 - d_{\gamma_2 v}^2}{2 d_{\gamma_1 v} . d_{\gamma_1 \gamma_2}}$$ et $d_{\gamma_1 v_0} = d_{\gamma_1 v}/\cos\alpha$. On vérifie ensuite si cos $\alpha$ > $\rho_T$ (où $\rho_T$ est un seuil prédéterminé)

et si $d_{\gamma_1 v_0} < d_{\gamma_1 \gamma_2}$. Si c'est bien le cas, l'arête hypothétique entre $\gamma_1$ et $\gamma_2$ est validée, sinon on poursuit le traitement avec le noeud suivant du graphe géodésique.

Lorsque le traitement de tous les points du graphe géodésique est achevé, on a obtenu toutes les arêtes du graphe $\Omega$, comme représenté en Fig. 5C.

A l'étape 360, on associe à chaque mesure un point du graphe $\Omega$. Par point du graphe $\Omega$, on entend soit un noeuds $\gamma$, soit un point d'une arête de $\Omega$. Plus précisément, si ladite mesure est représentée par un noeud $v$ de $G$, deux situations peuvent se présenter:

 a) le noeud $v$ de $G$ est également un noeuds du graphe $\Omega$ (par exemple si $v$ est le représentant d'une communauté de $G$), la mesure est alors associée au noeud $v$ de $\Omega$ ;
 b) le noeud $v$ de $G$ n'est pas un noeud du graphe $\Omega$, la mesure est alors associée au noeud $v_0$, projection de $v$ sur l'arête $E$ reliant le couple des noeuds $(\gamma_1, \gamma_2)$ de $\Omega$ tel que $\gamma_1$ est le plus proche de $v$ (au sens de la plus faible distance géodésique) et $\gamma_2$ est le noeud $\sigma$ de $\Omega$ maximisant le cosinus de l'angle $\alpha$ formé par $\overrightarrow{\gamma_1 v}$ et $\overrightarrow{\gamma_1 \sigma}$. La mesure en question est alors associée au couple de noeuds $(\gamma_1, \gamma_2)$ et à un coefficient d'interpolation $\chi$ entre $\gamma_1$ et $\gamma_2$.

Comme décrit plus haut, la méthode de cartographie de signatures Wi-Fi se poursuit par une caractérisation topographique de la trajectoire, et plus précisément du graphe représentatif $\Omega$.

Cette caractérisation topographique fait appel à un modèle géométrique de la zone considérée (représentation filaire, graphe de navigation). De préférence, le modèle géométrique se présente sous la forme d'un graphe, dénommé ci-après graphe géométrique $\Gamma$ de cette zone. Si le modèle géométrique ne se présente pas sous la forme d'un graphe, il est toujours possible de se ramener au cas précédent en extrayant un graphe du modèle en question. Le cas échéant, plusieurs graphes géométriques peuvent être extraits du modèle géométrique, chaque graphe géométrique correspondant à un degré de résolution différent.

Le graphe $\Gamma$ comprend des arêtes représentant des axes de déplacement dans la zone (par exemple des couloirs), ces arêtes reliant des noeuds représentant généralement soit des intersections entre axes de déplacement (croisements, changements de direction), soit, pour les noeuds extrémaux, des accès à la zone en question (entrées/sorties). En tout état de cause, les coordonnées (2D ou 3D) de chaque noeud de $\Gamma$ sont connues. La position d'un point situé sur une arête de $\Gamma$ se déduit simplement par interpolation des coordonnées des noeuds reliés par cette arête.

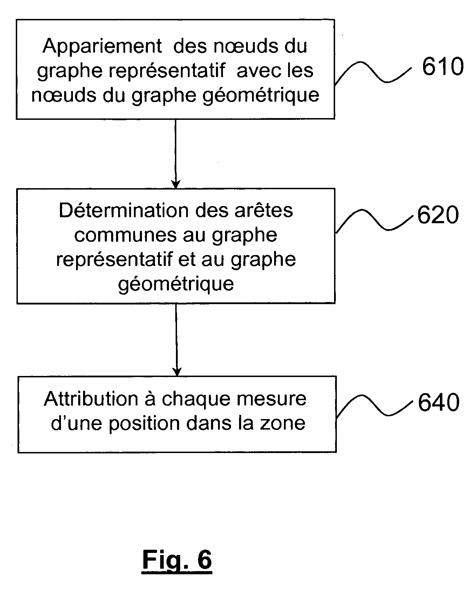

La Fig. 6 représente un exemple de réalisation de la caractérisation topographique du graphe $\Omega$.

Dans une première étape, 610, on apparie les noeuds du graphe $\Omega$ à des noeuds du graphe géométrique, $\Gamma$.

A cette fin, on peut utiliser des méthodes d'appariement de graphes (*graph matching*) connues de l'état de la technique, par exemple celle décrite dans l'article de M. Zaslavskiy et al. intitulé « A path following algorithm for the graph matching problem » publié dans IEEE Trans. on pattern analysis and machine intelligence, Vol. 31, No. 12, Dec. 2009, pages 2227-2242.

Lorsque la séquence de mesures de départ comprend une mesure labellisée, l'appariement exploite avantageusement cette labellisation pour faciliter l'appariement entre noeuds. Plus précisément, si la mesure labellisée correspond à un noeud du graphe $\Omega$, ce noeud est apparié au noeud de $\Gamma$ ayant la position la plus proche de celle du label. Si la mesure labellisée correspond à un point $v_0$ d'une arête $E$ entre deux noeuds $\gamma_1$ et $\gamma_2$ (avec un rapport d'interpolation $\chi$) de $\Omega$, les noeuds $\gamma_1$ et $\gamma_2$ seront respectivement appariés à des noeuds $\gamma'_1$ et $\gamma'_2$ de r tels que le point $v'$ obtenu par interpolation entre $\gamma'_1$ et $\gamma'_2$ (avec le même rapport d'interpolation) soit le plus proche possible de celle donnée par le label. De manière générale, lorsqu'une mesure est labellisée, l'appariement des noeuds devra respecter au mieux la contrainte de position donnée par le label, par exemple en minimisant une fonction de coût.

Si le récepteur est équipé de capteurs additionnels adaptés à fournir une information de distance parcourue (podomètre par exemple) ou de direction (gyromètre, magnétomètre, etc.) et que des mesures additionnelles sont labellisées par cette information (en pratique un enregistrement de la base de données comprend alors, outre les $P$ niveaux RSS, une indication fournie par le capteur), les informations en question peuvent également être exploitées pour faciliter l'appariement.

Une fois cet appariement de noeuds réalisé, on détermine en 620, les arêtes communes aux graphes $\Omega$ et $\Gamma$. Une arête du graphe $\Gamma$ peut correspondre (autrement dit être équivalente) à plusieurs arêtes du graphe $\Omega$.

Selon une première variante, si le récepteur, encore équipé de capteurs additionnels, effectue une estimation de sa trajectoire de *dead reckoning,* des informations géométriques relatives à cette trajectoire peuvent être exploitées pour faciliter l'appariement des noeuds et/ou des arêtes aux étapes 610 et 620. Ces informations géométriques peuvent être notamment des longueurs de segments de trajectoire et/ou des orientations relatives entre segments. Ainsi des segments extraits de la trajectoire de *dead reckoning* ne pourront être appariés à des arêtes du graphe géométrique si leurs longueurs respectives diffèrent sensiblement.

Selon une seconde variante, l'appariement des noeuds et des arêtes du graphe $\Omega$ avec ceux du graphe géométrique est effectuée par l'intermédiaire d'un appariement de la trajectoire de *dead reckoning* avec le graphe géométrique.

Plus précisément, dans une première étape, la trajectoire de *dead reckoning* est mise en correspondance avec le graphe géométrique en recherchant un parcours de ce graphe le plus proche possible de cette trajectoire. Cette mise en correspondance peut être effectuée par exemple à l'aide d'un algorithme probabiliste d'appariement de graphes (*graph matching*) tel que décrit dans l'article mentionné plus haut. La mise en correspondance peut en outre avantageusement utiliser des données labellisées lorsque certaines mesures additionnelles sont rattachées à des positions déterminées.

Dans une seconde étape, on utilise la relation temporelle entre les mesures RSS et les mesures additionnelles pour apparier le graphe $\Omega$ avec le graphe géométrique. En effet, une mesure RSS simultanée à une mesure additionnelle peut être associée à un point de la trajectoire de *dead reckoning* et donc, via la mise en correspondance précédente, à un point du graphe géométrique.

A l'étape 630, on attribue à chaque mesure une position de la manière suivante :

Si la mesure correspond à un noeud $\gamma$ du graphe $\Omega$ (situation (a) ci-dessus), la position attribuée à la mesure est celle du noeud $\gamma'$ de $\Gamma$ apparié *avec* $\gamma$.

Si la mesure correspond à un point $v_0$ d'une arête $\gamma_1\gamma_2$ de $G$, la position attribuée à la mesure est obtenue par interpolation (avec le même coefficient d'interpolation $\chi$ caractérisant $v_0$) entre les positions des noeuds $\gamma'_1$ et $\gamma'_2$ de $\Gamma$ respectivement appariés avec $\gamma_1$ et $\gamma_2$.

Lorsqu'une mesure est labellisée, celle-ci conserve l'information de position donnée par le label et la position fournie à l'étape 640 peut ne pas lui être associée.

Après qu'une position a été attribuée à chaque mesure, les mesures ainsi que leurs positions attribuées respectives sont stockées dans la base de données. On obtient ainsi une cartographie de signatures Wi-Fi.

Cette cartographie peut être utilisée par l'utilisateur pour déterminer directement sa trajectoire et *a fortiori* sa position courante. On remarquera que ce positionnement ne requiert pas de disposer au préalable d'une cartographie de mesures RSS mais qu'au contraire cette cartographie peut être élaborée à partir des mesures effectuées.

Dans un mode préférentiel de réalisation, la cartographie de signatures Wi-Fi est élaborée de manière collaborative, chaque utilisateur fournissant simultanément ou successivement une séquence de mesures lors du déplacement le long de sa trajectoire respective.

La cartographie de signatures Wi-Fi peut ensuite être utilisée de manière conventionnelle pour permettre à un utilisateur quelconque de se positionner dans la zone à l'aide de la signature Wi-Fi mesurée par son terminal.

**Revendications**

1. Méthode de cartographie de signatures Wi-Fi dans une zone géographique prédéterminée, comprenant :

 - une étape de collecte de mesures de puissance de signaux Wi-Fi (110), chaque mesure étant représentée par un vecteur constitué par les niveaux de puissance respectifs de signaux émis par une pluralité de points d'accès Wi-Fi, la collecte desdites mesures étant effectuée séquentiellement le long d'au moins une trajectoire d'un utilisateur au sein de ladite zone géographique, pour fournir au moins une séquence de mesures ;

 **caractérisée en ce qu'**elle comprend en outre :

 - une étape de détermination d'un graphe représentatif de la trajectoire (120), chaque mesure de ladite séquence correspondant à un noeud ou à un point unique d'une arête de ce graphe ;
 - une étape de caractérisation topographique de ladite trajectoire (130) à partir au moins dudit graphe représentatif de la trajectoire et d'un modèle géométrique de la zone géographique, la caractérisation topographique associant à chaque mesure un point du modèle géométrique ;
 - une étape de stockage de la séquence de mesures dans une base de données (140), chaque mesure étant stockée en relation avec le point du modèle géométrique qui lui a été associé à l'étape précédente.

2. Méthode de cartographie de signatures Wi-Fi selon la revendication 1, **caractérisée en ce que** l'étape de détermination du graphe représentatif de la trajectoire, Ω, comprend le calcul (310) d'une matrice de distances constituée par des distances entre les mesures de ladite séquence, prises deux à deux, les mesures de ladite séquence étant rangées selon un ordre chronologique prédéterminé.

3. Méthode de cartographie de signatures Wi-Fi selon la revendication 2, **caractérisée en ce que** la détermination du graphe représentatif de la trajectoire, Ω, comprend en outre les étapes suivantes :

- construction d'un premier graphe (320), dit graphe de voisinage, *V*, dont chaque noeud correspond à une mesure de ladite séquence de mesures, deux noeuds du premier graphe étant reliés par une arête si les mesures correspondant à ces noeuds satisfont à un critère de voisinage, ladite arête étant alors affectée d'un poids égal à la distance entre ces mesures ;
- construction d'un second graphe (330), dont les noeuds sont identiques aux noeuds du premier graphe, dit graphe géodésique, *G*, deux noeuds du graphe géodésique étant reliés par une arête dont le poids est égal à la longueur du plus court chemin entre ces noeuds dans le graphe de voisinage.

4. Méthode de cartographie de signatures Wi-Fi selon la revendication 3, **caractérisée en ce qu'**elle comprend une collecte de mesures horodatées de capteurs additionnels, dites mesures additionnelles, le calcul d'une trajectoire à l'estime à partir desdites mesures additionnelles, ledit critère de voisinage de deux mesures étant satisfait si une distance, $D(\mu_i, \mu_j)$ entre ces deux mesures est inférieure à un premier seuil prédéterminé et si la distance, $d(P_i, P_j)$, entre les points de la trajectoire à l'estime où ces mesures ont été prises est inférieure à un second seuil prédéterminé.

5. Méthode de cartographie de signatures Wi-Fi selon la revendication 3 ou 4, **caractérisée en ce que** le graphe géodésique est soumis à une réduction de dimension à l'aide d'un algorithme MDS-MAP.

6. Méthode de cartographie de signatures Wi-Fi selon l'une des revendications 3 à 5, **caractérisée en ce que** le graphe représentatif de la trajectoire est obtenu par simplification (340) du graphe géodésique.

7. Méthode de cartographie de signatures Wi-Fi selon la revendication 6, **caractérisée en ce que** la simplification du graphe géodésique est réalisée au moyen d'une découpe par communautés de ce graphe, après réduction de dimension ou non, les noeuds du graphe représentatif de la trajectoire étant des représentants respectifs des communautés ainsi obtenues.

8. Méthode de cartographie de signatures Wi-Fi selon la revendication 7, **caractérisée en ce que** la découpe par communautés du graphe géodésique est réalisée en :

- effectuant une analyse par composantes principales des mesures correspondant aux noeuds du graphe géodésique situés dans un voisinage de ce noeud ;
- classant par ordre décroissant les valeurs propres obtenues par ladite analyse ;
- comparant le rapport de la première à la seconde valeur propre par rapport à un seuil prédéterminé, le noeud étant classé comme étant de premier type, si le rapport est supérieur à ce seuil, et comme étant de second type, dans le cas inverse ;
- regroupant dans une même communauté les noeuds du second type satisfaisant à un critère de connectivité prédéterminé.

9. Méthode de cartographie de signatures Wi-Fi selon la revendication 8, **caractérisée en ce que** le critère de connectivité d'un noeud du graphe géodésique est le nombre d'arêtes reliées à ce noeud dans le graphe de voisinage.

10. Méthode de cartographie de signatures Wi-Fi selon l'une des revendications 6 à 9, **caractérisée en ce qu'**à chaque mesure on associe (360) un point du graphe représentatif de la trajectoire, ledit point étant défini soit comme un noeud soit comme un point d'une arête de ce graphe.

11. Méthode de cartographie de signatures Wi-Fi selon la revendication 10, **caractérisée en ce que** si le noeud du graphe géodésique représentant ladite mesure fait également partie du graphe représentatif de la trajectoire, la mesure est associée à ce noeud, et qu'à défaut, le noeud du graphe géodésique, représentant ladite mesure, est projeté sur une arête reliant des premier et second noeuds, la mesure étant alors associée au point obtenu par projection, défini par le couple desdits premier et second noeuds et par un coefficient d'interpolation entre ces noeuds.

12. Méthode de cartographie de signatures Wi-Fi selon l'une des revendications précédentes, **caractérisée en ce que** l'étape de caractérisation topographique (130) de la trajectoire comprend un appariement (610, 620) du graphe représentatif de la trajectoire avec un graphe extrait du modèle géométrique, dit graphe géométrique.

13. Méthode de cartographie de signatures Wi-Fi selon la revendication 12, **caractérisée en ce qu'**elle comprend une collecte de mesures horodatées de capteurs additionnels, dites mesures additionnelles, le calcul d'une trajectoire à l'estime à partir desdites mesures additionnelles, et que l'appariement du graphe représentatif de la trajectoire et du graphe géométrique utilise des informations géométriques relative à la trajectoire à l'estime.

14. Méthode de cartographie de signatures Wi-Fi selon la revendication 12, **caractérisée en ce qu'**elle comprend une collecte de mesures horodatées de capteurs additionnels, dites mesures additionnelles, le calcul d'une trajectoire à l'estime à partir desdites mesures additionnelles, et que l'appariement du graphe représentatif de la trajectoire et du graphe géométrique comprend une étape intermédiaire d'appariement de la trajectoire à l'estime avec un parcours du graphe géométrique.

15. Méthode de cartographie de signatures Wi-Fi selon la revendication 12, **caractérisée en ce que** l'on attribue à chaque mesure associée à un noeud du graphe représentatif de la trajectoire, la position du noeud du graphe géométrique qui lui est apparié, et que l'on attribue à chaque mesure associée à un point d'une arête du graphe représentatif de la trajectoire une position obtenue par interpolation entre les positions des noeuds du graphe géométrique respectivement appariés aux noeuds reliés par cette arête dans ledit graphe représentatif.

16. Méthode de cartographie selon la revendication 15, **caractérisée en ce que**, pour une mesure donnée, l'interpolation entre les positions des noeuds du graphe géométrique utilise le même coefficient d'interpolation, $\chi$, que celui entre noeuds du graphe représentatif de la trajectoire.

17. Méthode de cartographie de signatures Wi-Fi selon l'une des revendications précédentes, **caractérisée en ce qu'**au moins une mesure est labellisée par un label donnant une information de position.

18. Méthode de cartographie selon l'une des revendications 12 à 17, caractérisée que si la mesure labellisée est associée à un noeud du graphe représentatif de la trajectoire, ce noeud est apparié au noeud du graphe géométrique ayant la position la plus proche de celle donnée par le label de la mesure.

**Patentansprüche**

1. Verfahren zum Kartographieren von Wi-Fi-Signaturen in einer vorbestimmten geographischen Zone, umfassend:

- einen Schritt des Sammelns von Messungen von Leistungen von Wi-Fi-Signalen (110), wobei jede Messung durch einen Vektor repräsentiert wird, der gebildet ist durch die jeweiligen Leistungsniveaus von Signalen, die durch eine Mehrzahl von Wi-Fi-Zugangspunkten ausgesandt werden, wobei das Sammeln der Messungen sequenziell entlang wenigstens einer Trajektorie eines Benutzers innerhalb der geographischen Zone durchgeführt wird, um wenigstens eine Sequenz von Messungen zu liefern;

**dadurch gekennzeichnet, dass** es ferner umfasst:

- einen Schritt des Bestimmens eines Graphen, der für die Trajektorie (120) repräsentativ ist, wobei jede Messung der Sequenz einem Knoten oder einem einzigen Punkt einer Kante dieses Graphen entspricht;
- einen Schritt der topographischen Charakterisierung der Trajektorie (130) ausgehend wenigstens von dem Graphen, der für die Trajektorie repräsentativ ist, und von einem geometrischen Modell der geographischen Zone, wobei die topographische Charakterisierung jeder Messung einen Punkt des geometrischen Modells zuordnet;
- einen Schritt des Speicherns der Sequenz von Messungen in einer Datenbank (140), wobei jede Messung in Relation mit dem Punkt des geometrischen Modells gespeichert wird, der ihm im vorhergehenden Schritt zugeordnet worden ist.

2. Verfahren zum Kartographieren von Wi-Fi-Signaturen nach Anspruch 1, **dadurch gekennzeichnet, dass** der Schritt des Bestimmens des für die Trajektorie repräsentativen Graphen $\Omega$ die Berechnung (310) einer Matrix von Abständen umfasst, gebildet durch Abstände zwischen den Messungen der Sequenz, paarweise genommen, wobei die Messungen der Sequenz in einer vorbestimmten chronologischen Ordnung angeordnet werden.

3.  Verfahren zum Kartographieren von Wi-Fi-Signaturen nach Anspruch 2, **dadurch gekennzeichnet, dass** die Bestimmung des für die Trajektorie repräsentativen Graphen Ω ferner die folgenden Schritte umfasst:

    - Konstruktion eines ersten Graphen (320) V, genannt Nachbarschaftsgraph, bei dem jeder Knoten einer Messung der Sequenz von Messungen entspricht, wobei zwei Knoten des ersten Graphen durch eine Kante verbunden sind, wenn die Messungen, die diesen Knoten entsprechen, einem Nachbarschaftskriterium genügen, wobei die Kante dann mit einem Gewicht gleich dem Abstand zwischen diesen Messungen versehen wird;
    - Konstruktion eines zweiten Graphen (330) G, bei dem die Knoten identisch zu den Knoten des ersten Graphen sind, genannt geodätischer Graph, wobei zwei Knoten des geodätischen Graphen durch eine Kante verbunden sind, deren Gewicht gleich der Länge des kürzesten Wegs zwischen diesen Knoten in dem Nachbarschaftsgraphen ist.

4.  Verfahren zum Kartographieren von Wi-Fi-Signaturen nach Anspruch 3, **dadurch gekennzeichnet, dass** es ein Sammeln von mit Zeitstempeln versehenen Messungen von zusätzlichen Sensoren umfasst, genannt zusätzliche Messungen, wobei die Berechnung einer Trajektorie näherungsweise ausgehend von den zusätzlichen Messungen erfolgt, wobei das Nachbarschaftskriterium von zwei Messungen erfüllt wird, wenn ein Abstand $D(\mu_i, \mu_j)$ zwischen diesen zwei Messungen kleiner ist als eine erste vorbestimmte Schwelle, und wenn der Abstand $d(P_i, P_j)$ zwischen den Punkten der genäherten Trajektorie, wo diese Messungen genommen worden sind, kleiner als eine zweite vorbestimmte Schwelle ist.

5.  Verfahren zum Kartographieren von Wi-Fi-Signaturen nach Anspruch 3 oder 4, **dadurch gekennzeichnet, dass** der geodätische Graph einer Reduktion der Dimension mit Hilfe eines MDS-MAP-Algorithmus unterzogen wird.

6.  Verfahren zum Kartographieren von Wi-Fi-Signaturen nach einem der Ansprüche 3 bis 5, **dadurch gekennzeichnet, dass** der für die Trajektorie repräsentative Graph durch Simplifizierung (340) des geodätischen Graphen erhalten wird.

7.  Verfahren zum Kartographieren von Wi-Fi-Signaturen nach Anspruch 6, **dadurch gekennzeichnet, dass** die Simplifizierung des geodätischen Graphen mit Hilfe einer Unterteilung dieses Graphen in Gemeinschaften nach einer Reduktion der Dimension oder ohne sie realisiert wird, wobei die Knoten des für die Trajektorie repräsentativen Graphen jeweilige Repräsentanten der derart erhaltenen Gemeinschaften sind.

8.  Verfahren zum Kartographieren von Wi-Fi-Signaturen nach Anspruch 7, **dadurch gekennzeichnet, dass** das Unterteilen des geodätischen Graphen in Gemeinschaften realisiert wird durch:

    - Durchführen einer Analyse bei Hauptkomponenten der Messungen entsprechend den Knoten des geodätischen Graphen, die in einer Nachbarschaft dieses Knoten liegen;
    - Klassifizieren der Eigenwerte, die durch die Analyse erhalten werden, in abnehmender Reihenfolge;
    - Vergleichen des Verhältnisses des ersten zum zweiten Eigenwert bezüglich einer vorbestimmten Schwelle, wobei der Knoten als vom ersten Typ klassifiziert wird, wenn das Verhältnis größer als diese Schwelle ist, und als vom zweiten Typ im umgekehrten Fall;
    - Umgruppieren der Knoten des zweiten Typs in ein und derselben Gemeinschaft, die einem vorbestimmten Konnektivitätskriterium genügen.

9.  Verfahren zum Kartographieren von Wi-Fi-Signaturen nach Anspruch 8, **dadurch gekennzeichnet, dass** das Konnektivitätskriterium eines Knoten des geodätischen Graphen die Zahl von Kanten ist, die mit diesem Knoten in dem Nachbarschaftsgraphen verbunden sind.

10. Verfahren zum Kartographieren von Wi-Fi-Signaturen nach einem der Ansprüche 6 bis 9, **dadurch gekennzeichnet, dass** man jeder Messung einen Punkt des für die Trajektorie repräsentativen Graphen zuordnet (360), wobei der Punkt entweder als ein Knoten oder als ein Punkt einer Kante dieses Graphen definiert wird.

11. Verfahren zum Kartographieren von Wi-Fi-Signaturen nach Anspruch 10, **dadurch gekennzeichnet, dass** dann, wenn der Knoten des geodätischen Graphen, der die Messung repräsentiert, ebenfalls Teil des für die Trajektorie repräsentativen Graphen ist, die Messung diesem Knoten zugeordnet wird, und dass anderenfalls der Knoten des geodätischen Graphen, der die Messung repräsentiert, auf eine Kante projiziert wird, die erste und zweite Knoten verbindet, wobei die Messung dann dem durch Projektion erhaltenen Punkt zugeordnet wird, definiert durch das Paar aus erstem und zweitem Knoten und durch einen Koeffizienten der Interpolation zwischen diesen Knoten.

**12.** Verfahren zum Kartographieren von Wi-Fi-Signaturen nach einem der vorhergehenden Ansprüche, **dadurch gekennzeichnet, dass** der Schritt der topographischen Charakterisierung (130) der Trajektorie eine Paarung (610, 620) des für die Trajektorie repräsentativen Graphen mit einem aus dem geometrischen Modell extrahierten Graphen, genannt geometrischer Graph, umfasst.

**13.** Verfahren zum Kartographieren von Wi-Fi-Signaturen nach Anspruch 12, **dadurch gekennzeichnet, dass** es ein Sammeln von mit Zeitstempeln versehenen Messungen von zusätzlichen Sensoren umfasst, genannt zusätzliche Messungen, wobei die Berechnung einer Trajektorie näherungsweise ausgehend von den zusätzlichen Messungen erfolgt, und dass die Paarung des für die Trajektorie repräsentativen Graphen und des geometrischen Graphen geometrische Informationen bezüglich der genäherten Trajektorie verwendet.

**14.** Verfahren zum Kartographieren von Wi-Fi-Signaturen nach Anspruch 12, **dadurch gekennzeichnet, dass** es ein Sammeln von mit Zeitstempeln versehenen Messungen von zusätzlichen Sensoren umfasst, genannt zusätzliche Messungen, wobei die Berechnung einer Trajektorie näherungsweise ausgehend von den zusätzlichen Messungen erfolgt, und dass die Paarung des für die Trajektorie repräsentativen Graphen und des geometrischen Graphen einen Zwischenschritt der Paarung der genäherten Trajektorie mit einem Parcours des geometrischen Graphen umfasst.

**15.** Verfahren zum Kartographieren von Wi-Fi-Signaturen nach Anspruch 12, **dadurch gekennzeichnet, dass** man jeder Messung, die einem Knoten des für die Trajektorie repräsentativen Graphen zugeordnet ist, die Position des Knoten des geometrischen Graphen zuordnet, der ihm paarweise zugeordnet ist, und dass man jeder Messung, die einem Punkt einer Kante des für die Trajektorie repräsentativen Graphen zugeordnet ist, eine Position zuordnet, die erhalten wird durch Interpolation zwischen den Positionen der Knoten des geometrischen Graphen, die jeweils mit den Knoten gepaart sind, die durch diese Kante in dem repräsentativen Graphen verbunden sind.

**16.** Verfahren zum Kartographieren nach Anspruch 15, **dadurch gekennzeichnet, dass** für eine gegebene Messung die Interpolation zwischen den Positionen der Knoten des geometrischen Graphen den gleichen Interpolationskoeffizienten $\chi$ verwendet, wie jenen zwischen Knoten des für die Trajektorie repräsentativen Graphen.

**17.** Verfahren zum Kartographieren von Wi-Fi-Signaturen nach einem der vorhergehenden Ansprüche, **dadurch gekennzeichnet, dass** wenigstens eine Messung mit einer Markierung markiert ist, die eine Positionsinformation gibt.

**18.** Verfahren zum Kartographieren nach einem der Ansprüche 12 bis 17, **dadurch gekennzeichnet, dass** dann, wenn die markierte Messung einem Knoten des für die Trajektorie repräsentativen Graphen zugeordnet wird, dieser Knoten mit dem Knoten des geometrischen Graphen gepaart wird, der die nächstliegende Position zu jener hat, die durch die Markierung der Messung gegeben ist.

**Claims**

**1.** Method for mapping Wi-Fi fingerprints in a predetermined geographical area, **characterised in that** it comprises:

- a step of collecting Wi-Fi signal strength measurements (110), with each measurement being represented by a vector constituted by the respective signal strength levels emitted by a plurality of Wi-Fi access points, with the collecting of said measurements being carried out sequentially along at least one path of a user in said geographical area, in order to provide at least one sequence of measurements;
- a step of determining a graph that is representative of the path (120), with each measurement of said sequence corresponding to a node or to a single point of an edge of this graph;
- a step of topographical characterisation of said path (130) using at least said graph that is representative of the path and a geometric model of the geographical area, with the topographical characterisation associating each measurement with a point of the geometric model;
- a step of storing the sequence of measurements in a database (140), with each measurement stored in relation with the point of the geometric model that was associated to it in the preceding step.

**2.** Method for mapping Wi-Fi fingerprints according to claim 1, **characterised in that** the step of determining the graph that is representative of the path, $\Omega$, comprises the calculation (310) of a matrix of distances constituted by distances between the measurements of said sequence, taken two by two, with the measurements of said sequence being arranged according to a predetermined chronological order.

3. Method for mapping Wi-Fi fingerprints according to claim 2, **characterised in that** the determining of the graph that is representative of the path, $\Omega$, further comprises the following steps:

- construction of a first graph (320), referred to as neighbourhood graph, $v$ , of which each node corresponds to a measurement of said sequence of measurements, with two nodes of the first graph being connected by an edge if the measurements corresponding to these nodes satisfy a neighbourhood criterion, with said edge then being affected by a weight equal to the distance between these measurements;
- constructing of a second graph (330), of which the nodes are identical to the nodes of the first graph, referred to as geodesic graph, G , with two nodes of the geodesic graph being connected by an edge of which the weight is equal to the length of the shortest path between these nodes in the neighbourhood graph.

4. Method for mapping Wi-Fi fingerprints according to claim 3, **characterised in that** it comprises a collecting of time stamped measurements from additional sensors, referred to as additional measurements, the calculation of a dead reckoning path from said additional measurements, said neighbourhood criterion of two measurements being satisfied if a distance, $D\ (\mu_i, \mu_j)$, between these two measurements is less than a first predetermined threshold and if the distance, $d\ (P_i,\ P_j)$, between the points of the dead reckoning path where these measurements were taken is less than a second predetermined threshold.

5. Method for mapping Wi-Fi fingerprints according to claim 3 or 4, **characterised in that** the geodesic graph is subjected to a reduction of dimension using a MDS-MAP algorithm.

6. Method for mapping Wi-Fi fingerprints according to one of claims 3 to 5, **characterised in that** the graph that is representative of the path is obtained by simplification (340) of the geodesic graph.

7. Method for mapping Wi-Fi fingerprints according to claim 6, **characterised in that** the simplification of the geodesic graph is carried out by means of a clustering for this graph, after reduction of dimension or not, the nodes of the graph representative of the path being respective representatives of the clusters thus obtained.

8. Method for mapping Wi-Fi fingerprints according to claim 7, **characterised in that** the clustering of the geodesic graph is carried out by:

- carrying out a principal component analysis of the measurements corresponding to the nodes of the geodesic graph located in a neighbourhood of this node;
- sorting in descending order the eigenvalues obtained by said analysis;
- comparing the ratio of the first to the second eigenvalue in relation to a predetermined threshold, with the node being classified as being of the first type, if the ratio is greater than this threshold, and as being of the second type, in the opposite case;
- grouping together into the same cluster the nodes of the second type that satisfy a predetermined criterion of connectivity.

9. Method for mapping Wi-Fi fingerprints according to claim 8, **characterised in that** the criterion of connectivity of a node of the geodesic graph is the number of edges connected to this node in the neighbourhood graph.

10. Method for mapping Wi-Fi fingerprints according to one of claims 6 to 9, **characterised in that** to each measurement is associated (360) a point of the graph that is representative of the path, said point being defined either as a node or as a point on an edge of this graph.

11. Method for mapping Wi-Fi fingerprints according to claim 10, **characterised in that** if the node of the geodesic graph representing said measurement is also part of the graph that is representative of the path, the measurement is associated with this node, and otherwise, the node of the geodesic graph, representing said measurement, is projected on an edge connecting first and second nodes, the measurement then being associated with the point obtained by projection, defined by the pair of said first and second nodes and by a interpolation coefficient between these nodes.

12. Method for mapping Wi-Fi fingerprints according to one of the preceding claims, **characterised in that** the step of topographical characterisation (130) of the path comprises a graph matching (610, 620) that is representative of the path with a graph extracted from the geometric model, referred to as geometric graph.

**13.** Method for mapping Wi-Fi fingerprints according to claim 12, **characterised in that** it comprises a collecting of time stamped measurements from additional sensors, referred to as additional measurements, the calculation of a dead reckoning path from said additional measurements, and that the graph matching that is representative of the path and of the geometric graph uses geometric information relative to the dead reckoning path.

**14.** Method for mapping Wi-Fi fingerprints according to claim 12, **characterised in that** it comprises a collecting of time stamped measurements from additional sensors, referred to as additional measurements, the calculation of a dead reckoning path from said additional measurements, and that the graph matching that is representative of the path and of the geometric graph comprises an intermediary step of matching the dead reckoning path with a path of the geometric graph.

**15.** Method for mapping Wi-Fi fingerprints according to claim 12, **characterised in that** each measurement associated with a node of the graph that is representative of the path is then attributed the position of the node of the geometric graph that is matched to it, and that each measurement associated to a point of an edge of the graph representative of the path is attributed a position obtained by interpolation between the positions of the nodes of the geometric graph respectively matched to the nodes connected by this edge in said representative graph.

**16.** Method for mapping according to claim 15, **characterised in that**, for a given measurement, the interpolation between the positions of the nodes of the geometric graph use the same interpolation coefficient, $\chi$, as that between nodes of the graph that is representative of the path.

**17.** Method for mapping Wi-Fi fingerprints according to one of the preceding claims, **characterised in that** at least one measurement is labelled by a label giving position information.

**18.** Method for mapping according to one of claims 12 to 17, **characterised in that** if the labelled measurement is associated with a node of the graph representative of the path, this node is matched to the node of the geometric graph that has the position closest to that given by the label of the measurement.

Collecte d'une séquence de
mesures RSS le long de la
trajectoire dans la zone

110

Détermination d'un graphe
représentatif de la trajectoire

120

Caractérisation topographique
de la trajectoire à l'aide d'un
modèle géométrique de la zone

130

140

Stockage des mesures avec
leurs positions respectives
dans la base de données

**Fig. 1**

Matrice de distance

**Fig. 2**

**Fig. 4**

Calcul de la matrice de distance de la séquence de mesures ⌇310

Construction du graphe de voisinage ⌇320

Construction du graphe géodésique à partir du graphe de voisinage ⌇330

Simplification du graphe géodésique ⌇340

Obtention du graphe représentatif de la trajectoire à partir du graphe géodésique simplifié ⌇350

Association à chaque mesure d'un point du graphe représentatif de la trajectoire ⌇360

**Fig. 3**

**Fig. 5A**

**Fig. 5B**

**Fig. 5C**

**Fig. 5D**

Appariement des nœuds du
graphe représentatif avec les
nœuds du graphe géométrique · · · · 610

Détermination des arêtes
communes au graphe
représentatif et au graphe
géométrique · · · · 620

Attribution à chaque mesure
d'une position dans la zone · · · · 640

## Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. FERRIS et al.** Wi-Fi SLAM using gaussian process latent variable models. *Proc. of the International Joint Conf. on Artificial Intelligence,* 2007, 2480-2485
- **J. KOO et al.** Autonomous construction of a WiFi access point map using multidimensional scaling. *Field Programmable Logic an Application,* 01 Janvier 2011, vol. 6696, 115-132
- **Y. SHANG et al.** Localization from mere connectivity. *Proc. of the 4th ACM Int'l Symposium on Mobile Ad Hoc Networking & Computing, MOBIHOC '03,* 01 Janvier 2003, 201-212
- **C. ELLIS et al.** A comparison of MDS-MAP and non-linear regression. *Proc. of 2010 International Conference on Indoor Positioning and Indoor Navigation (IPIN),* 15 Septembre 2010
- **S.E. SCHAEFFER.** *Graph clustering » publié dans Computer Science Review I,* 2007, 27-64
- **M. ZASLAVSKIY et al.** A path following algorithm for the graph matching problem. *IEEE Trans. on pattern analysis and machine intelligence,* Décembre 2009, vol. 31 (12), 2227-2242